(19) Europäisches Patentamt / European Patent Office / Office européen des brevets

(11) **EP 4 293 334 A1**

(12) **EUROPEAN PATENT APPLICATION**

(43) Date of publication:
**20.12.2023   Bulletin 2023/51**

(21) Application number: **22179440.7**

(22) Date of filing: **16.06.2022**

(51) International Patent Classification (IPC):
**G01M 17/007** (2006.01)

(52) Cooperative Patent Classification (CPC):
**G01M 17/0078**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **VOLKSWAGEN AG**
**38440 Wolfsburg (DE)**

(72) Inventor: **Medghalchi, Bahareh**
**38102 Braunschweig (DE)**

(54) **CRASH TEST DEVICE, APPARATUS, METHOD AND COMPUTER PROGRAM FOR CONTROLLING A CRASH TEST DEVICE AND FOR TRAINING A NEURAL NETWORK**

(57)    Embodiments relate to a method (10) for controlling a crash test device for testing a vehicular chassis or body based on acceleration pulses. The method (10) comprises obtaining (12) information on an adapted pulse (410), which is based on a pulse (400) desired to be experienced by the vehicular chassis or body; using (14) a neural network to determine configuration parameters for the crash test device based on the adapted pulse (410); and providing (16) the configuration parameters to the crash test device.

Fig. 1

**Description**

The present invention relates to the field of neural networks or machine learnings. Embodiments relate to a crash test device, an apparatus, a method and a computer program for controlling a crash test device for testing a vehicular chassis or body based on acceleration pulses and to an apparatus, a method and a computer program for training a neural network for controlling a crash test device for testing a vehicular chassis or body based on acceleration pulses, more particularly, but not exclusively, to a concept for configuring a crash test device based on a trained neural network.

Nowadays, expanding and development of safety systems of vehicles plays a central role in the development of the automobile Industry. Passive safety is the mitigation of the consequences of accidents and the protection of the occupants by means of a vehicle's structure and equipment, e.g. airbags, seat-belts or stable vehicle body/chassis. With the aid of experimental simulations crash tests can be simulated under almost realistic conditions. A crash test may include a collision simulation of vehicles under realistically defined conditions for gaining an overview of the behavior of the safety equipment of the vehicle and its occupants. Throughout a crash test, the acceleration of the vehicle is first increased extremely according to special guidelines and then again reduced. By using measurement equipment and sensors the accident situation and effect of crash test on different parts of the vehicle can be examined and studied. Sled testing is one of the experiments in which a rolling platform is accelerated due to a given acceleration signal and then with the help of a hydro brake, the rolling platform is abruptly decelerated and braked.

Generally, in a crash test, a vehicle body/chassis is planted on a rolling platform rather than a complete vehicle and all sensors and measuring equipment are mounted on that vehicle body. For design, inspection, and assurance of restraint systems (airbags, emergency tension retractors) in the field of passive vehicle safety, the crashes are simulated and driven on the sled equipment and the performance of the restraint systems can be evaluated without testing and scrapping a real vehicle. In contrast to a real crash test, sled test can be driven multiple times a day without damages on a real vehicle, therefore sled testing is one of the most cost-effective test methods for the crash tests in vehicle safety development.

The validity of the test results depends highly on the precision of the acceleration signal, namely crash pulses, which are run on the sled system. Conventionally, the parameters of the sled tests are set manually, based on experiment and experience of operators, i.e. the people who are responsible for the system operation. The test is repeated many times until the desired acceleration signal (that corresponds as much as possible to the given acceleration signal) is produced and setting those parameters manually is a time consuming and cumbersome task.

Generally speaking, it is intended to obtain the experimental acceleration signals (actual pulses) as close as possible to the given acceleration signal (desired pulses). Identifying the technical parameters for optimizing the acceleration signal as well as evaluating the efficiency of the simulated crash test on the sled is important.

In view of the conventional concepts there is a demand for an improved concept for controlling a crash test device. This demand is met according to the appended independent claims.

Embodiments are based on the finding that data obtained by iterative testing at a crash test device can be stored and used to train a machine, e.g. a neural network. With the help of a neural network, the configuration parameters of a crash test device can be set more efficiently, e.g. less iterations are necessary to obtain sufficient parameter settings, they may even be found right away without iterations. Embodiments may use an approach, which is based on forecasting the rate of similarity between the experimentally resulted acceleration signals (actual pulse) and a given acceleration signal (desired pulse), and which is based on identifying the technical parameters for optimizing this process using artificial intelligence.

Embodiments provide a method for controlling a crash test device for testing a vehicular chassis/body based on acceleration pulses. The method comprises obtaining information on an adapted pulse, which is based on a pulse desired to be experienced by the vehicular chassis or body. The method further comprises using a neural network to determine configuration parameters for the crash test device based on the adapted pulse and providing the configuration parameters to the crash test device. Therewith, embodiments provide a more efficient concept for controlling a crash test device.

For example, the method may comprise obtaining information on an actual pulse from the crash test device and determining quality information based on the information on the actual pulse and the information on the adapted pulse. The quality information may be used as an indicator whether the result, i.e. the parameters forming the basis for the actual pulse, have been sufficiently set.

In some embodiments, the method may comprise training the neural network based on the quality information. Embodiments may enable a continuous learning process of the neural network by evaluating the actual pulses against the desired pulses and training the neural network in case sufficient quality has been achieved.

The quality information may be a correlation factor of the adapted pulse and the actual pulse. A correlation factor may be an efficient quality information making a deviation between the actual pulse and the desired pulse measurable.

The adapted pulse may comprise one or more translatory or rotary dimensions. Embodiments may hence be used to cover multiple translatory or rotatory dimensions. For example, the crash test device may comprise a hydraulic sled for sled testing of the vehicular chassis or body. Embodiments may enable efficient control of an acceleration of a hydraulic sled. According to some embodiments, the crash test device may comprise multiple hydraulic sleds for sled testing of the vehicular chassis or body in multiple dimensions, one sled being capable of moving in multiple dimensions, respectively. Embodiments may enable efficient multi-dimensional control of an acceleration of hydraulic sleds.

In further embodiments the method may comprise obtaining information on the pulse desired to be experienced by the vehicular chassis or body and determining the adapted pulse based on the pulse desired. For example, embodiments may enable automated adaptation of a desired pulse.

Embodiments further provide a method for training a neural network for controlling a crash test device for testing a vehicular chassis or body based on acceleration pulses. The method comprises obtaining training data based on manually optimized configuration parameters for the crash test device. The manually optimized configuration parameters are based on adapted pulses, which are based on desired pulses to be experienced by the vehicular chassis or body, and measured actual pulses generated at the vehicular chassis or body by the crash test device. An actual pulse fulfills a predetermined quality criterion with respect to an associated adapted pulse. The method further comprises training the neural network with the training data. Embodiments may enable efficient training of a neural network.

For example, the manually optimized configuration parameters are based on experimental data. Embodiments may enable re-use of experimental data being based on iterations and operator experience.

According to an example, an adapted pulse may comprise one or more translatory or rotary dimensions. Embodiments may enable network training for multi-dimensional acceleration settings.

The predetermined quality criterion may comprise a level of correlation between an adapted pulse and a measured actual pulse. A level of correlation may be used as and efficient indicator of the level of matching between an adapted and a measured pulse.

Embodiments also provide a computer program having a program code for performing one of the methods as described herein, when the computer program is executed on a computer, a processor, or a programmable hardware component.

A further embodiment is an apparatus comprising one or more interfaces configured to communicate with one or more further components. The apparatus further comprises processing circuitry, which is configured to control the one or more interfaces and to perform a method as described herein.

Another embodiment relates to a crash test device comprising an apparatus according to the present description.

Some examples of apparatuses and/or methods will be described in the following by way of example only, and with reference to the accompanying figures, in which

Fig. 1 shows a block diagram of an embodiment of a method for controlling a crash test device for testing a vehicular chassis or body based on acceleration pulses;

Fig. 2 shows a block diagram of an embodiment of a method for controlling a crash test device for testing a vehicular chassis or body based on acceleration pulses;

Fig. 3 shows a block diagram of an embodiment of an apparatus and an embodiment of a crash test device;

Fig. 4 shows an example of a pulse processing sequence in an embodiment;

Fig. 5 shows example pulses in an embodiment;

Fig. 6 shows processing operations in an embodiment; and

Fig. 7 shows an embodiment in which quality information is determined.

Some embodiments are now described in more detail with reference to the enclosed figures. However, other possible embodiments are not limited to the features of these embodiments described in detail. Other embodiments may include modifications of the features as well as equivalents and alternatives to the features. Furthermore, the terminology used herein to describe certain embodiments should not be restrictive of further possible embodiments.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification. When two elements A and B are combined using an 'or', this is to be understood as disclosing all possible combinations, e.g., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

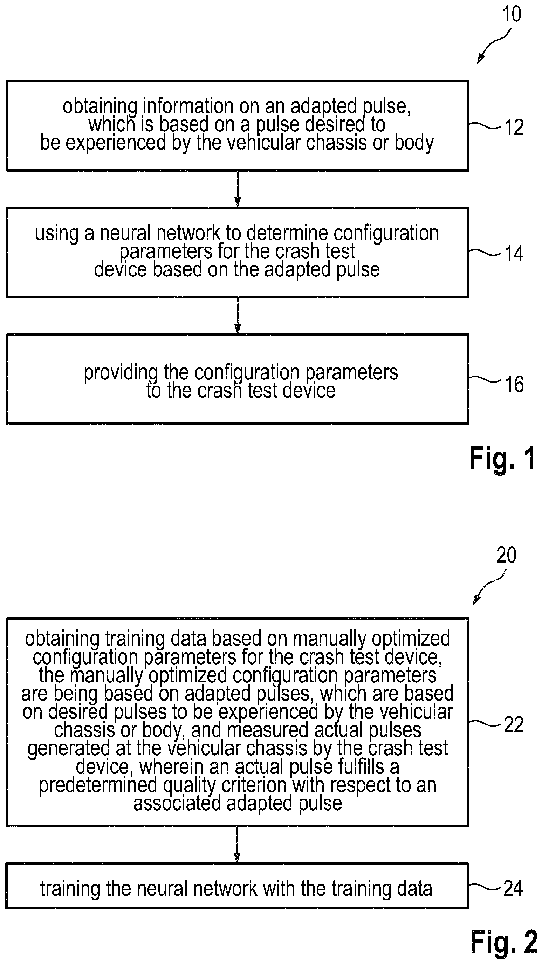

Fig. 1 shows a block diagram of an embodiment of a method 10 for controlling a crash test device for testing a vehicular chassis/body based on acceleration pulses. The method 10 comprises obtaining 12 information on an adapted pulse, which is based on a pulse desired to be experienced by the vehicular chassis/body. The method 10 further comprises using 14 a neural network to determine configuration parameters for the crash test device based on the adapted pulse. The method 10 further comprises providing 16 the configuration parameters to the crash test device.

The crash test device may be any test stand or testing setup for testing a vehicle, its body, its chassis, or combinations thereof on their physical stability by applying one- or multi-dimensional accelerations. For example, one or more sleds may be used or sleds that can be accelerated along one or more translatory or rotary dimensions. The vehicular chassis may be a vehicle body, a vehicle frame, or any part of a vehicle, it may even be an entire vehicle and it may depend on the nature of the test to be applied. The pulses as described herein may be represented as time signals, which may be continuous or discrete. For example, they may correspond to a time series of samples of an acceleration.

Examples for configuration parameters for the crash test device are:

1- Plunging speed of the hydraulic brake dependent on the desired pulse;
2- Start of the pre-acceleration;
3- Accelerating distance;
4- Starting value of the friction at the sled, prediction of the friction dependent on the temperature;
5- Final velocity of the vehicle body;
6- Values of the hydraulic brake; and
7- Starting points of the desired pulse values, brake distance, surface structure of the brake pad.

The neural network may be any machine learning network or an artificial neural network (ANN), which is based on a collection of connected units or nodes, sometimes also called artificial neurons. Such a network may loosely model the neurons in a biological brain. An artificial neuron may receive signals, processes them, and signal neurons connected to it. The "signal" at a connection may be a real number, and the output of each neuron may be computed by some non-linear function of the sum of its inputs. The connections are referred to as edges. Neurons and edges typically have a weight that adjusts as learning proceeds. The weight increases or decreases the strength of the signal at a connection. Neurons may have a threshold such that a signal is sent only if the aggregate signal crosses that threshold. Typically, neurons are aggregated into layers. Different layers may perform different transformations on their inputs. Signals travel from the first layer (the input layer), to the last layer (the output layer), possibly after traversing the layers multiple times.

The neural network may be trained by processing examples, each of which contains a known "input" and "result", forming probability-weighted associations between the two, which are stored within the data structure of the network itself. The training of a neural network from a given example is usually conducted by determining the difference between the processed output of the network (often a prediction) and a target output. This difference is the error. The quality information, which is used in some embodiments may be a measure representing such an error. The network may then adjust its weighted associations according to a learning rule and using this error value. Successive adjustments will cause the neural network to produce output which is increasingly similar to the target output. After a sufficient number of these adjustments the training can be terminated based upon certain criteria. This is also known as supervised learning.

Fig. 2 shows a block diagram of an embodiment of a method 20 for controlling a crash test device for testing a vehicular chassis or body based on acceleration pulses. The method 20 comprises obtaining 22 training data based on manually optimized configuration parameters for the crash test device. The manually optimized configuration parameters are based on adapted pulses, which are based on desired pulses to be experienced by the vehicular chassis or body, and measured actual pulses generated at the vehicular chassis or body by the crash test device. An actual pulse fulfills a predetermined quality criterion with respect to an associated adapted pulse e.g. a certain condition with respect to the error. The method 20 further comprises training 24 the neural network with the training data.

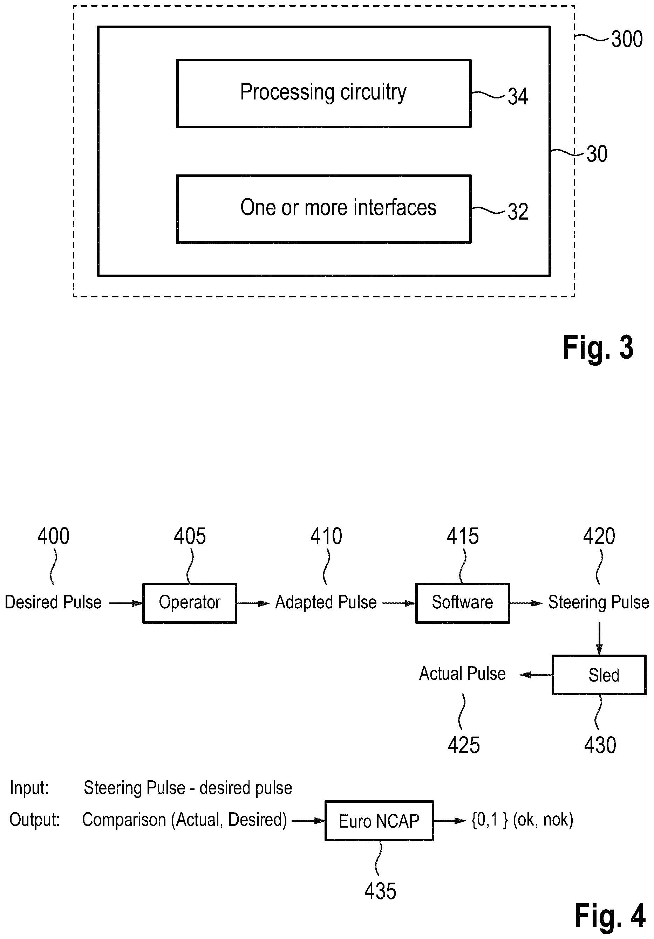

Fig. 3 shows a block diagram of an embodiment of an apparatus 30 and an embodiment of a crash test device 300 comprising an embodiment of the apparatus 30. The apparatus 30 comprises one or more interfaces 32, which are configured to communicate with one or more further components. Such further components may be other network components, computers or input devices or other components of the crash test device. The apparatus 30 further comprises processing circuitry 34, which is configured to control the one or more interfaces 32 and to perform a method 10, 20 as described herein. As further indicated in dotted lines in Fig. 3, a device 300 comprising the apparatus 30 is a further embodiment.

The one or more interfaces 32 may be implemented as any means for communicating information, e.g. transmitting, receiving, or transmitting and receiving. For example, the one or more interfaces 32 may correspond to one or more contacts, inputs/outputs, and/or modules to communicate physical signals. The one or more interfaces 32 may comprise a software interface/module and/or an interface to a transmission medium. The one or more interfaces 32 may be configured to take as input and/or provide as output any data that is processed by the processing circuitry 34. The one or more interfaces 32 may enable communication with components of the vehicle or device, e.g. actuators of the crash test device, a sled, hydraulic components, a modem, a server storing information about the vehicle/device/test, display of the vehicle/device, graphic processor of the vehicle/device, etc.

As further shown in Fig. 3 the respective one or more interfaces 32 are coupled to the processing circuitry 34, which may comprise one or more processors, and which controls the one or more interfaces 32. In examples, the processing circuitry 34 may be implemented using one or more processing units, one or more processing devices, any means for processing, such as a processor, processing circuits, a computer or a programmable hardware component being operable with accordingly adapted software. In other words, the described function of the processing circuitry may as well be implemented in software, which is then executed on one or more programmable hardware components. Such hardware components may comprise a general-purpose processor, a Digital Signal Processor (DSP), a micro-controller, central processing unit (CPU), etc.

Conventionally parameters of sled tests may be set manually and are based on experiments of operators. They repeat the tests so many times until the desired signal (that corresponds as much as possible with given and required acceleration signal) is produced. In many fields of optimizing the performance of a mechanically complex system, software, which use finite element methods, are used for simulating the mechanical processes. In a way that through considering the friction of all surfaces and taking pressure at all hydraulic cylinders into account, a resulting signal can be calculated. However, a quality of the results can only be as good as the simulation assumptions match reality. Since in realty there are also random factors, simulations results are imperfect.

Handling this problem in a manual way, which is at the moment a common practice for the sled test, is a time consuming and cumbersome task. In light of the complexity of the simulation task for this problem and due to increasing requirements, the knowledge-based approaches may fail to define the optimal operational parameters and specifying a database for different operating conditions, trial-and-error approaches and finite element (FE) simulation seem to be infeasible.

Furthermore, embodiments may enable a method of optimizing parameters for a horizontal sled (one-dimensional (1D) sled) to be extended for a PYR sled (pitch, yaw, roll sled), where the vehicle body (chassis) will be moved and inspected not only in one direction but in six directions (3 displacement directions X-Y-Z and 3 rotational directions (6D)). Embodiments may be capable for a project extension from 1D to 6D and in this case finite element simulations may prone to get way much complex and inefficient by only a little bit changing the details of the experiment, unless the changed parts are considered and included in the simulation in detail. Extending such a project from 1 to 6 dimensions may complicate the simulation parameters of the simulation in a way that it becomes computationally complex and not easily solvable. In embodiments the adapted pulse may comprise one or more translatory or rotary dimensions. The crash test device may comprise a hydraulic sled for sled testing of the vehicular chassis or body. The crash test device comprises multiple hydraulic sleds or a sled that can be moved in multiple dimensions for sled testing of the vehicular chassis or body in multiple dimensions.

In the following an introduction about the steps carried out throughout the sled test is given and then further embodiments are detailed based on the introduced terms.

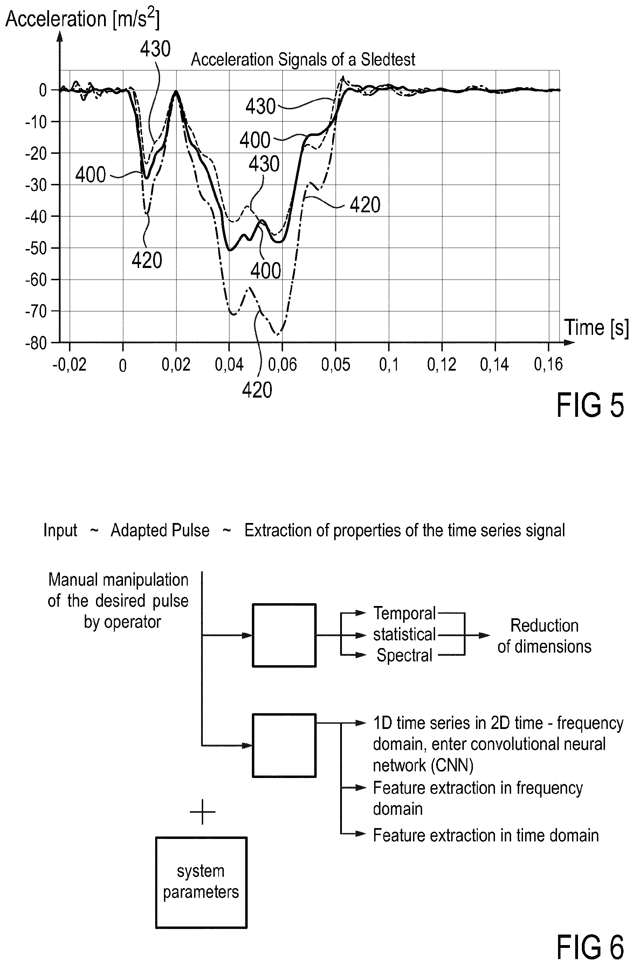

Subsequently the proposed artificial intelligent approach (used synonymously to neural network herein) is going to be illustrated in detail. For running a sled test, an acceleration signal is initially given, which is desired to be produced eventually in the experiment. This acceleration signal or time series data is called "desired pulse". Fig. 4 shows an example of a pulse processing sequence in an embodiment and Fig. 5 shows example pulses in an embodiment, In Figs. 4 and 5 the desired pulses 400 are illustrated in the processing sequence (starting point in Fig. 4) and as an example time series 400 in Fig. 5.

The desired 'pulse' is modified manually by a system operator 405 in order to get prepared for the operation through sled installation. As an example, shifting the zero crossings to the origin is one of the modification steps which is carried out at this step. In some embodiments the method 10 may further comprise obtaining information on the pulse desired to be experienced by the vehicular chassis or body and determining the adapted pulse based on the pulse desired. The resulting manipulated acceleration signal is called adapted pulse 410, which is also illustrated in Fig. 4. In the next step the adapted pulse is input into a software 415, which controls operation of the sled and which is created for adjusting the settings for the sled. The software calculates the signal which is called steering pulse 420 and which is shown in Figs 4 and 5. In order to drive the vehicle body with the given acceleration signal (namely adapted pulse 410), the sled under the vehicle body should be driven according to a specific acceleration signal, which is calculated by the software based on the given adapted pulse. This acceleration signal of the rolling platform is called steering pulse 420.

In other words, the software 415 gets the adapted pulse 410 and calculates the associated steering pulse 420 accordingly. Afterwards, the rolling platform of the sled 425 is driven with the acceleration of the steering pulse 420. The vehicle body is planted on the sled and finally the acceleration signal from of the vehicle body is recorded through the planted sensors. This resulting acceleration of the vehicle body is called actual pulse 430 (Figs. 4 and 5), which is the output of the sled 425. Principally the purpose of this embodiment is to produce an actual pulse 430, which resembles the desired pulse 400 as much as possible. As further illustrated in Fig. 4 the input of the method in this embodiment may further evaluate quality information based on the inputs steering pulse 420 and desired pulse 400. The output may be a comparison of the actual pulse 430 and the desired pulse 400. For example, the Euro NCAP (European New Car Assessment Program) may provide guidelines to determine a quality value in the interval {0,1}, which can be evaluated against a threshold to determine whether the actual pulse is considered ok or not ok (nok).

The method 10 may hence comprise obtaining information on an actual pulse 430 from the crash test device (sled) and determining quality information based on the information on the actual pulse 430 and the information on the adapted pulse 410 or the desired pulse 400. In some embodiments the method further comprises training the neural network based on the quality information. For example, the quality information may be a correlation factor of the desired/adapted pulse and the actual pulse, or a value defined by Euro NCAP.

In some embodiments, inputs and outputs are determined of an artificial intelligence (AI) algorithm/neural network: In this case the input of the AI algorithm is the adapted pulse 410, which is the pulse that is input into the software 415. Since the time series data might not be an appropriate input for an AI algorithm, it may be converted into numerical variables, which can be used as input parameters for AI algorithm later on. This data acquisition step could, for example, be carried out throughout libraries which are created especially for machine learning applications. They convert data from time signals to numerical values, through extracting temporal, statistical and spectral values of the signal.

Fig. 6 shows processing operations in an embodiment. In this embodiment the input is the adapted pulse 410, which was subject to manual manipulation of the desired pulse 400 by the operator. The method 20 may hence use manually optimized configuration parameters, which are based on experimental data. From the adapted pulse 410 properties of the time series signal can be extracted. These properties can be temporal, statistical or spectral properties and they may be used to reduce the dimensions. For example, one-dimensional time is converted into a two-dimensional time-frequency domain. Feature extraction may then take place in the frequency domain and/or in the time domain. At this step a first set of the input data for the AI algorithm is extracted.

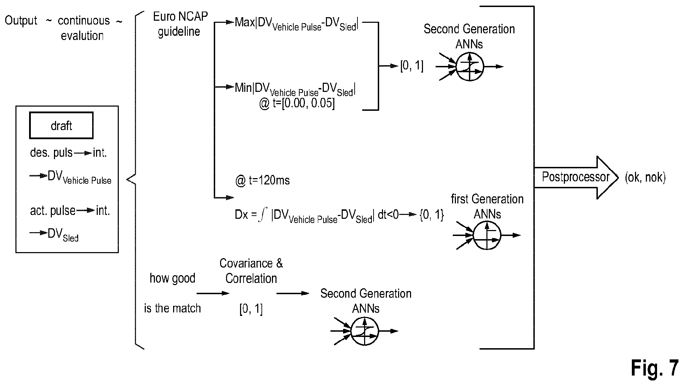

The second set of data which should be considered as input for the AI algorithm are system parameters, which should be set for the sled system. After extracting the numerical input data, a common data preparation step for the machine learning applications is carried out, where outliers are eliminated before entering the AI algorithm and features are re-scaled in the range of 0 and 1 before entering the AI algorithm. In the next step the outputs of the AI algorithm is going to be introduced. Fig. 7 shows an embodiment in which quality information is determined.

A comparison between the resulting actual pulse and the inserted adapted pulse is carried out for extracting the outputs for the AI algorithm. The output can be continuously evaluated. This comparison is done by using the metrics, which can compare two time series signals. Evaluating a correlation coefficient is one of the most popular metrics for comparing two signals and gives out a continuous value between 0 and 1 for this assessment. Furthermore, for a special kind of the crash test, namely far-side tests, EuroNCAP has issued some guidelines, according to which the actual pulse is compared with the adapted pulse and if all of the requirements are fulfilled, the actual pulse is defined as ok. This indicated in Fig. 7 by the evaluation according to Euro NCAP, e.g.

$$Max \ |DV_{Vehicle\,Pulse} - DV_{Sled}|,$$

$$Min|DV_{Vehicle\,Pulse} - DV_{Sled}| @ \ t=[0.00,0.05],$$

$$@ \ t=120 \ ms$$

$$DX = \int |DV_{Vehicle\,Pulse} - DV_{Sled}| dt,$$

which can all be mapped onto a value range of [0,1] and be derived by a second generation artificial neural network. Postprocessing can then determine whether the result was ok or nok. As further shown at the bottom of Fig. 7 a second generation artificial neural network may as well be used to determine a level of matching between the actual pulse and the desired pulse using covariance and correlation analysis. The predetermined quality criterion may comprise a level of correlation between an adapted pulse and a measured actual pulse. Moreover, may be used to integrate pulses, e.g. to determine drafts for the velocity of the vehicle ($DV_{Vehicle\,Pulse}$) or the velocity of the sled ($DV_{Sled}$).

For the case in which some specific guidelines are available, the output may be issued in the form of classification values like 0 or 1, but assessing the EuroNCAP requirements in the form of continues values (as outputs of the algorithm) and then finding out, whether the requirements are fulfilled based on the continuous outputs may ease both training and optimizing procedures. The main algorithm, which is going to be trained, may be a neural network with an activation function of sigmoid, which provides the user continues outputs between 0 and 1. Afterwards, by assessing the network, through feature importance methods such as Random Forest Classification, it can be defined which features or which inputs had a more or most important role in changing and controlling the outputs. So that only specific inputs get manipulated and optimized before running the crash test. This network may be applied to a horizontal sled in which the car body is going to be moved just in one direction. After finding the optimum hyper parameters for the one-dimensional case, the method may be aligned and developed for the more-dimensional, 6-dimensional, sled by the use of transfer learning. An adapted pulse may comprise one or more translatory or rotary dimensions.

Throughout the method, may which compare the actual and adapted pulses, e.g. by means of a correlation coefficient, a mathematical and objective strategy may be implemented in order to determine, whether the resulting actual pulse should be identified as successful pulse or unsuccessful one. Embodiments may provide methods for comparing these two signals and the evaluation of the signal quality may depend on the experience of system operators, since it is inherited in the data the neural network is trained with.

In an embodiment, the following sequence may be applied:

1. A desired pulse is given by test specifications;
2. An adapted pulse is calculated accordingly;
3. From the time series signal of the adapted pulse numerical values are calculated as inputs for the application/neural network;
4. The numerical inputs are given into the neural network;
5. Continuous assessment values like either correlation coefficient or EuroNCAP metrics are calculated for the given inputs;
6. If correlation coefficient is selected as the output (normally for the crash tests other than far-side tests), it should be found out, whether the similarity limit is fulfilled, and
if EuroNCAP metrics (in the case of far-side crash test) are selected, it should be found out, whether all of the calculated values fulfill the EuroNCAP regulations;
7. Based on the forecast, which is output by the neural network, the people who are responsible for the sled (operators) can know if the output signal (actual pulse) would resemble the input signal (desired Pulse) sufficiently, before running the test. In addition, the relevant features, that are extracted from feature importance methods, would get manipulated to get an improved or even optimum actual pulse possible.

A sled test may be simulated using software that uses finite element methods. Dealing with this problem through software, which uses finite element methods and taking mechanical factors into account, may complicate the problem solving procedure and may lead to computationally expensive approaches and this complication may even be overwhelming when switching from 1D to 6D sled.

By initial adaptation of the method to the one-dimensional sled, the initial network for the 6-dimensional sled may be prepared and the optimization process for the 6-dimensional sled would not start from the scratch. Apart from that, by taking advantage of "Transfer learning" for the trained network using fewer samples in case of a 6-dimensional sled, the process of training and optimizing a Network for 6D sled may be accelerated.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order.

Furthermore, in further examples, a single step, function, process or operation may include and/or be broken up into several sub-steps, -functions, -processes or -operations. If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system. If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

Embodiments may be based on using a machine-learning model or machine-learning algorithm, which is use synonymously to neural network herein. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

Machine-learning models may be trained using training input data. The examples specified above may use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm.

Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (predefined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

List of reference numerals

10    A method for controlling a crash test device for testing a vehicular chassis based on acceleration pulses

12    obtaining information on an adapted pulse, which is based on a pulse desired to be experienced by the vehicular chassis

14    using a neural network to determine configuration parameters for the crash test device based on the adapted pulse

16    providing the configuration parameters to the crash test device

20    A method for training a neural network for controlling a crash test device for testing a vehicular chassis based on acceleration pulses

22    obtaining training data based on manually optimized configuration parameters for the crash test device, the manually optimized configuration parameters are being based on adapted pulses, which are based on desired pulses to be experienced by the vehicular chassis, and measured actual pulses generated at the vehicular chassis by the crash test device, wherein an actual pulse fulfills a predetermined quality criterion with respect to an associated adapted pulse

24    training the neural network with the training data

30    Apparatus
32    One or more interfaces
34    Processing circuitry
300    Crash test device
400    desired pulse
405    Operator
410    Adapted pulse
415    Software
420    Steering pulse
425    Sled
430    Actual pulse
435    Euro NCAP

**Claims**

1.    A method (10) for controlling a crash test device for testing a vehicular chassis or body based on acceleration pulses, the method (10) comprising obtaining (12) information on an adapted pulse (410), which is based on a pulse (400) desired to be experienced by the vehicular chassis or body; using (14) a neural network to determine configuration parameters for the crash test device based on the adapted pulse (410); and providing (16) the configuration parameters to the crash test device.

2.    The method (10) of claim 1, further comprising obtaining information on an actual pulse (430) from the crash test device and determining quality information based on the information on the actual pulse (430) and the information on the adapted pulse (410).

3.    The method (10) of claim 2, further comprising training the neural network based on the quality information.

4.    The method (10) of one of the claims 2 or 3, wherein the quality information is a correlation factor of the adapted pulse (410) and the actual pulse (430).

5.    The method (10) of one of the claims 1 to 4, wherein the adapted pulse (410) comprises one or more translatory or rotary dimensions.

6.    The method (10) of one of the claims 1 to 5, wherein the crash test device comprises a hydraulic sled for sled testing of the vehicular chassis or body.

7.    The method (10) of one of the claims 1 to 5, wherein the crash test device comprises multiple hydraulic sleds for sled testing of the vehicular chassis or body in multiple dimensions.

8.    The method (10) of one of the claims 1 to 7, further comprising obtaining information on the pulse desired (400) to be experienced by the vehicular chassis or body and determining the adapted pulse (410) based on the pulse desired (400).

9.    A method (20) for training a neural network for controlling a crash test device for testing a vehicular chassis or body based on acceleration pulses, the method (20) comprising obtaining (22) training data based on manually optimized configuration parameters for the crash test device, the manually optimized configuration parameters are being based on adapted pulses (410), which are based on desired pulses (400) to be experienced by the vehicular chassis or body, and measured actual pulses (430) generated at the vehicular chassis or body by the crash test device, wherein an actual pulse (430) fulfills a predetermined quality criterion with respect to an associated adapted pulse (410); and training (24) the neural network with the training data.

10.    The method (20) of claim 9, wherein the manually optimized configuration parameters are based on experimental data.

11.    The method (20) of one of the claims 9 or 10, wherein an adapted pulse (410) comprises one or more translatory or rotary dimensions.

12.    The method (20) of one of the claims 9 to 11, wherein the predetermined quality criterion comprises a level of correlation between an adapted pulse (410) and a measured actual pulse (430).

13.    A computer program having a program code for performing a method (10; 20) according to any one of claims 1 to 12, when the computer program is executed on a computer, a processor, or a programmable hardware component.

14.    An apparatus (30) comprising:
one or more interfaces (32) configured to communicate with one or more network components; and processing circuitry (34) configured to control the one or more interfaces (32) and to perform a method (10, 20) according to any of claims 1 to 12.

15.    A crash test device (300) comprising an apparatus (30) according to claim 14.

10

```
┌─────────────────────────────────────────┐
│     obtaining information on an adapted pulse,        │
│        which is based on a pulse desired to          │     12
│     be experienced by the vehicular chassis or body  │
└─────────────────────────────────────────┘
                      │
                      ▼
┌─────────────────────────────────────────┐
│   using a neural network to determine configuration  │
│          parameters for the crash test               │     14
│          device based on the adapted pulse           │
└─────────────────────────────────────────┘
                      │
                      ▼
┌─────────────────────────────────────────┐
│        providing the configuration parameters        │
│              to the crash test device                │     16
└─────────────────────────────────────────┘
```

**Fig. 1**

20

```
┌─────────────────────────────────────────┐
│   obtaining training data based on manually optimized │
│    configuration parameters for the crash test device,│
│     the manually optimized configuration parameters   │
│    are being based on adapted pulses, which are based │
│   on desired pulses to be experienced by the vehicular│     22
│      chassis or body, and measured actual pulses      │
│   generated at the vehicular chassis by the crash test│
│        device, wherein an actual pulse fulfills a     │
│     predetermined quality criterion with respect to an│
│            associated adapted pulse                   │
└─────────────────────────────────────────┘
                      │
                      ▼
┌─────────────────────────────────────────┐
│   training the neural network with the training data  │     24
└─────────────────────────────────────────┘
```

**Fig. 2**

Fig. 3

Input: Steering Pulse - desired pulse

Output: Comparison (Actual, Desired) ⟶ Euro NCAP ⟶ {0,1 } (ok, nok)

435

Fig. 4

Acceleration [m/s²]

430

Acceleration Signals of a Sledtest

430

400

430

400

420

430

420

400

420

Time [s]

-0,02    0    0,02    0,04  ) 0,06    0,05    0,1    0,12    0,14    0,16

420

FIG 5

Input  ~  Adapted Pulse  ~  Extraction of properties of the time series signal

Manual manipulation
of the desired pulse
by operator

Temporal
statistical
Spectral

Reduction
of dimensions

+

system
parameters

1D time series in 2D time - frequency
domain, enter convolutional neural
network (CNN)

Feature extraction in frequency
domain

Feature extraction in time domain

FIG 6

Output ~ continuous ~ evalution

Euro NCAP guideline

→Max|DV$_{Vehicle\ Pulse}$-DV$_{Sled}$|

→Min|DV$_{Vehicle\ Pulse}$-DV$_{Sled}$|
@ t=[0.00, 0.05]

→[0, 1] →

Second Generation ANNs

draft

des. puls→int.

→DV$_{Vehicle\ Pulse}$

act. pulse→int.

→DV$_{Sled}$

@ t=120ms

$Dx = \int |DV_{Vehicle\ Pulse}-DV_{Sled}|\ dt<0$ → {0, 1}

first Generation ANNs

how good

is the match

Covariance & Correlation

[0, 1]

Second Generation ANNs

Postprocessor → (ok, nok)

Fig. 7

Europäisches
Patentamt

European
Patent Office

Office européen
des brevets

# EUROPEAN SEARCH REPORT

Application Number

**EP 22 17 9440**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/026820 A1 (POTTS GERALD R [US]) 7 March 2002 (2002-03-07) * paragraphs [0016], [0017] * * figures 3,4 * ----- | 1,2,4-8, 13-15 | INV. G01M17/007 |
| X | EP 2 354 777 A1 (AUTOLIV DEV [SE]) 10 August 2011 (2011-08-10) * paragraph [0003] * * figures 1,2 * ----- | 1,2,4-8, 13-15 | |

TECHNICAL FIELDS
SEARCHED      (IPC)

G01M

The present search report has been drawn up for all claims

| Place of search | Date of completion of the search | Examiner |
|---|---|---|
| The Hague | 17 November 2022 | Reto, Davide |

EPO FORM 1503 03.82 (P04C01)

Europäisches
Patentamt

European
Patent Office

Office européen
des brevets

Application Number

**EP 22 17 9440**

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1, 2, 4-8, 13-15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

**Application Number**

**EP 22 17 9440**

The Search Division considers that the present European patent application does not comply with the requirements of unity of invention and relates to several inventions or groups of inventions, namely:

```
1. claims: 1, 2, 4-8, 13-15

      Method for controlling a crash test device
                     ---


2. claims: 3, 9-12

      Method for training a neural network
                     ---
```

## ANNEX TO THE EUROPEAN SEARCH REPORT
## ON EUROPEAN PATENT APPLICATION NO.

EP 22 17 9440

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2022

| Patent document cited in search report | | | Publication date | Patent family member(s) | | | Publication date |
|---|---|---|---|---|---|---|---|
| US 2002026820 | A1 | | 07-03-2002 | NONE | | | |
| EP 2354777 | A1 | | 10-08-2011 | EP | 2354777 | A1 | 10-08-2011 |
| | | | | JP | 5506706 | B2 | 28-05-2014 |
| | | | | JP | 2011164100 | A | 25-08-2011 |
| | | | | KR | 20110091484 | A | 11-08-2011 |
| | | | | KR | 20130079468 | A | 10-07-2013 |
| | | | | US | 2011192240 | A1 | 11-08-2011 |

For more details about this annex : see Official Journal of the European Patent Office, No. 12/82

EPO FORM P0459